# EUROPÄISCHE PATENTSCHRIFT

(11) **EP 4 100 250 B1**
(45) Veröffentlichungstag und Bekanntmachung des Hinweises auf die Patenterteilung: **22.11.2023**
(21) Anmeldenummer: 21708567.9
(22) Anmeldetag: 05.02.2021
(51) Int. Cl.: B32B 17/10, H01B 7/04, H01B 7/08

(54) **ANSCHLUSSANORDNUNG MIT VERBUNDSCHEIBE UND FUNKTIONSELEMENT**
CONNECTION ASSEMBLY WITH LAMINATED GLASS AND FUNCTIONAL ELEMENT
AGENCEMENT DE RACCORDEMENT POURVU DE DISQUE COMPOSITE ET ÉLÉMENT FONCTIONNEL

(30) Priorität: 07.02.2020 EP 20156248
(43) Veröffentlichungstag der Anmeldung: 14.12.2022
(73) Patentinhaber: Saint-Gobain Glass France, 92400 Courbevoie (FR)
(72) Erfinder: HERMANGE, François, 52074 Aachen (DE)
(74) Vertreter: Gebauer, Dieter Edmund
(86) Internationale Anmeldenummer: PCT/EP2021/052873
(87) Internationale Veröffentlichungsnummer: WO 2021/156481

(56) Entgegenhaltungen:
- WO-A1-2014/019780
- WO-A1-2014/029536
- US-A1- 2018 301 832

## Beschreibung

Die Erfindung betrifft eine Anschlussanordnung mit einer Verbundscheibe und einem elektrooptischen Funktionselement, ein Verfahren zu deren Herstellung sowie deren Verwendung.

Flexible Flachleiter, auch Flachbandleiter oder Folienleiter genannt, werden vielfach im Fahrzeugbau eingesetzt, insbesondere um eine bewegliche, elektrische Kontaktierung bei beschränkten Raumbedingungen zu ermöglichen.

Im Fahrzeugbereich werden Flachleiter beispielsweise zur Kontaktierung von elektrisch funktionellen Schichten in Verbundglasscheiben verwendet. Beispiele finden sich in DE 42 35 063 A1, DE 20 2004 019 286 U1 oder DE 93 13 394 U1.

Solche Verbundglasscheiben bestehen in der Regel aus mindestens zwei starren Einzelglasscheiben, die durch eine thermoplastische Klebeschicht flächig-adhäsiv miteinander verbunden sind. Die Dicke der Klebeschicht liegt beispielsweise bei 0,76 mm. Zwischen den Einzelglasscheiben befinden sich zusätzlich elektrisch funktionelle Schichten wie Heizbeschichtungen und/oder Antennenelemente, die mit einem Flachleiter verbunden sind. Ein hierfür geeigneter Flachleiter weist lediglich eine Gesamtdicke von 0,3 mm auf. Derart dünne Flachleiter können ohne Schwierigkeiten zwischen den Einzelglasscheiben in der thermoplastischen Klebeschicht eingebettet werden. WO 2014/029536 A1 offenbart eine Anschlussanordnung, umfassend:
- eine Verbundscheibe aus einer ersten Scheibe und einer zweiten Scheibe, die mit einer Zwischenschicht verbunden sind, - ein elektrooptisches Funktionselement mit einer zwischen zwei Flächenelektroden angeordneten aktiven Schicht, das zwischen der ersten Scheibe und der zweiten Scheibe angeordnet ist. Die Flächenelektroden sind mit einer externen Spannungsquelle durch beispielsweise einem flexiblen Leiter in Form eines Streifens verbunden. WO 2014/019780 A1 offenbart eine ähnliche Anschlussanordnung. US 2018/301832 A1 offenbart ein Flachkabel.

Der Einsatz von Flachleitern zur Kontaktierung von elektrisch funktionellen Schichten ist nicht nur auf den Fahrzeugbereich beschränkt. Wie aus DE199 60 450 C1 bekannt, werden Flachleiter auch im Baubereich verwendet. In Verbund- oder Isolierglasscheiben dienen Folienleiter zur elektrischen Kontaktierung von integrierten elektrischen Bauelementen wie spannungsgesteuerten elektrochromen Schichten, Solarzellen, Heizdrähten, Alarmschleifen oder ähnlichem.

Bekannt ist auch die Verwendung von Flachleitern bei Verbundscheiben mit elektrooptischen Funktionselementen. Hierbei handelt es sich um flächenhafte Strukturen mit elektrisch regelbaren optischen Eigenschaften einer aktiven Schicht. Das heißt, die optischen Eigenschaften der aktiven Schicht und insbesondere deren Transparenz, Streuverhalten oder Leuchtkraft sind durch eine elektrische Spannung steuerbar. Beispiele für elektrooptische Funktionselemente sind SPD-Funktionselemente (SPD = Suspended Particle Device), die beispielsweise aus EP 0876608 B1 und WO 2011033313 A1 bekannt sind, und PDLC-Funktionselemente (PDLC = Polymer Dispersed Liquid Crystal), die beispielsweise aus DE 102008026339 A1 bekannt sind.

Elektrooptische Funktionselemente, wie SPD- oder PDLC-Funktionselemente, sind als Mehrschichtfolie kommerziell erhältlich, wobei die aktive Schicht zwischen zwei Flächenelektroden angeordnet ist, die zum Anlegen einer Spannung zur Steuerung der aktiven Schicht dienen. In aller Regel sind die beiden Flächenelektroden zwischen zwei Trägerfolien, typischerweise aus PET, angeordnet. Kommerziell erhältliche Mehrschichtfolien werden zudem beidseitig mit einer Schutzfolie aus Polypropylen oder Polyethylen abgedeckt, welche dazu dienen, die Trägerfolien vor Verschmutzungen oder Verkratzungen zu schützen.

Bei der Herstellung der Verbundscheibe wird das Funktionselement in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden.

Eine typische Anwendung sind Windschutzscheiben mit elektrisch regelbaren Sonnenblenden, welche beispielsweise aus DE 102013001334 A1, DE 102005049081 B3, DE 102005007427 A1 und DE 102007027296 A1 bekannt sind.

In der Regel wird vom Scheibenhersteller eine Scheibe mit einem kompletten Anschlusselement und einem Anschlussbereich zum werkzeuglosen Anschluss an eine weitere Steuerungselektrik gefordert.

Die elektrische Kontaktierung von elektrooptischen Funktionselementen erfolgt üblicherweise über Sammelleiter (auch als "Busbars" bezeichnet), die im Randbereich des Funktionselementes auf die Flächenelektroden aufgebracht sind und diese elektrisch leitend kontaktieren. Die Sammelleiter erstrecken sich ein Stück entlang der Flächenelektrode, um eine gute elektrische Anbindung zu schaffen. Durch Verbinden der Sammelleiter mit einer externen Spannungsquelle, typischer Weise über an den Sammelleitern angebrachte Flachleiter, wird eine Spannung an den Flächenelektroden angelegt und die aktive Schicht des Funktionselementes gesteuert bzw. geschaltet.

In einer typischen Ausgestaltung ist der Sammelleiter komplett auf der zugehörigen Flächenelektrode angeordnet, häufig in Form eines elektrisch leitfähigen Aufdrucks aus beispielsweise Silber, und mit einer weiteren elektrisch leitfähigen Struktur zur dessen Kontaktierung, beispielsweise ein Flachleiter, verlötet, welche in einem Winkel von 90° zum Sammelleiter angeordnet und aus der Verbundscheibe seitlich herausgeführt ist. Nachteilig bei dieser Vorgehensweise ist die Gefahr einer Beschädigung der Flächenelektrode beim Anlöten der elektrisch leitfähigen Struktur an den Sammelleiter im Bereich der Flächenelektrode.

Demgegenüber besteht die Aufgabe der vorliegenden Erfindung darin, eine verbesserte Anschlussanordnung mit Verbundscheibe und elektrooptischem Funktionselement bereitzustellen, bei der die Gefahr einer Beschädigung der Flächenelektroden durch Verlöten der aufgebrachten Sammelleiter mit elektrisch leitfähigen Strukturen nicht besteht. Zudem soll die Anschlussanordnung einfach, kostengünstig und effizient hergestellt werden können.

Diese und weitere Aufgaben werden erfindungsgemäß durch eine Anschlussanordnung gemäß Anspruch 1 gelöst. Bevorzugte Ausgestaltungen der Erfindung gehen aus den Unteransprüchen hervor. Ein Verfahren zur deren Herstellung sowie die Verwendung der Anschlussanordnung gehen aus den nebengeordneten Ansprüchen hervor.

Die erfindungsgemäße Anschlussanordnung umfasst eine Verbundscheibe aus einer ersten Scheibe und einer zweiten Scheibe, die mit einer Zwischenschicht verbunden sind, sowie ein elektrooptisches Funktionselement mit einer zwischen zwei Flächenelektroden angeordneten (elektrooptisch) aktiven Schicht, das zwischen der ersten Scheibe und der zweiten Scheibe angeordnet ist.

Für eine elektrische Kontaktierung der beiden Flächenelektroden ist jeweils ein einziger Sammelleiter (Busbar) vorgesehen. Die Sammelleiter sind jeweils in Streifenform ausgebildet und bestehen aus einem elektrisch leitfähigen Material. Die Sammelleiter sind vorgefertigte Streifen, welche mit der zugehörigen Flächenelektrode elektrisch leitend verbunden sind. Jede Flächenelektrode ist nur mit einem einzigen Sammelleiter elektrisch leitend verbunden, d.h. mit einem einteiligen bzw. einstückigen Sammelleiter, der umgefaltet und aus der Verbundscheibe herausgeführt ist.

Im Unterschied zur herkömmlichen Vorgehensweise ist es somit nicht erforderlich, pro Flächenelektrode einen Sammelleiter und eine weitere elektrisch leitfähige Struktur zur Kontaktierung des Sammelleiters vorzusehen, die im Bereich der Flächenelektrode miteinander verlötet sind. Hierdurch können Material, Kosten und Zeit bei der Herstellung der Anschlussanordnung eingespart werden. Zudem besteht keine Gefahr einer Beschädigung der Flächenelektrode durch das Verlöten des Sammelleiters mit der elektrisch leitfähigen Struktur.

Die Sammelleiter sind generell länglich ausgebildet und weisen entlang ihrer Erstreckungsrichtung zwei Enden auf. Die Sammelleiter sind jeweils Flachleiter, d.h. deren Breite ist deutlich größer als deren Dicke. Die Sammelleiter sind jeweils derart dünn ausgebildet (d.h. die Dicke ist derart gering), dass sie flexibel und biegbar sind und insbesondere umgefaltet werden können.

Die Sammeleiter sind jeweils flächig auf der zugehörigen Flächenelektrode angebracht. Dies ist vorteilhaft hinsichtlich einer einfachen Aufbringung der Sammelleiter. Das Aufbringen der Sammelleiter auf die Flächenelektroden kann insbesondere durch Auflegen, Löten oder Kleben erfolgen.

Die Sammelleiter sind bevorzugt jeweils als Streifen einer elektrisch leitfähigen Folie, insbesondere einer Metallfolie ausgebildet. Vorteilhaft enthält die Metallfolie eine Kupferfolie, eine Aluminiumfolie, eine Edelstahlfolie, eine Zinnfolie, eine Goldfolie oder eine Silberfolie oder besteht daraus. Die Metallfolie kann auch Legierungen mit den genannten Metallen enthalten oder daraus bestehen. Die Metallfolie ist vorteilhafterweise abschnittsweise oder vollständig verzinnt sein. Dies ist besonders vorteilhaft um eine gute Lötbarkeit bei gleichzeitigem Korrosionsschutz zu erzielen.

Die Sammelleiter weisen vorteilhaft jeweils eine Dicke von 10 µm bis 500 µm, bevorzugt von 30 µm bis 300 µm und insbesondere von 50 µm bis 150 µm auf. Derartig dünne Sammelleiter sind besonders flexibel und können gut in Verbundscheiben einlaminiert und aus diesen herausgeführt werden. Sammelleiter aus elektrisch leitfähigen Folien mit diesen Dicken sind technisch einfach zu realisieren und weisen eine vorteilhafte Stromtragfähigkeit auf.

Die Sammelleiter können mit der zugehörigen Flächenelektrode beispielsweise über eine Lotmasse, über einen elektrisch leitfähigen Kleber oder ein elektrisch leitfähiges Klebeband oder durch direktes Auflegen elektrisch leitend verbunden sein. Zur Verbesserung der leitenden Verbindung kann zwischen Flächenelektrode und Sammelleiter beispielsweise eine silberhaltige Paste angeordnet sein. Die Sammelleiter sind nicht im Druckverfahren oder durch ein anderweitiges Beschichtungsverfahren auf die Flächenelektroden aufgebracht,

Die Sammelleiter weisen vorteilhaft jeweils eine Breite von 0,5 mm bis 100 mm, bevorzugt von 1 mm bis 50 mm und insbesondere von 10 mm bis 30 mm auf. Derartige Breiten sind besonders geeignet um in Verbindung mit den oben genannten Dicken eine ausreichende Stromtragfähigkeit zu erzielen. Die Breite eines Sammelleiters kann konstant sein oder variieren.

Die Sammelleiter weisen vorteilhaft jeweils eine Länge von 5 cm bis 150 cm, bevorzugt von 10 cm bis 100 cm und insbesondere von 50 cm bis 90 cm auf. Es versteht sich, dass Länge, Breite und Dicke eines Sammelleiters an die Anforderungen des jeweiligen Einzelfalls angepasst werden können.

Bei einem Sammelleiter definiert die Richtung der Länge die Erstreckungsrichtung. Die Längen- und die Breitenrichtung spannen eine erste Seite und eine, der ersten Seite gegenüberliegende, zweite Seite auf. Die erste Seite kann beispielsweise auch als Oberseite und die zweite Seite kann als die Unterseite des Sammelleiters bezeichnet werden. Die Sammelleiter liegen mit ihrer Unterseite jeweils der zugehörigen Flächenelektrode auf. Das erste Ende und das zweite Ende sind jeweils die einander gegenüberliegenden Enden des Sammelleiters in Erstreckungsrichtung.

Die Sammelleiter umfassen jeweils einen ersten Anschlussbereich, der auf die zugehörige Flächenelektrode aufgebracht ist und somit Berührungskontakt (d.h. direkten mechanischen Kontakt) mit der Flächenelektrode oder einer zwischen Flächenelektrode und Sammelleiter angeordneten Schicht hat (z.B. Silberpaste). Der erste Anschlussbereich befindet sich an einem ersten Ende (Endbereich) des Sammelleiters. Die Sammelleiter umfassen weiterhin jeweils einen zweiten Anschlussbereich, der sich außerhalb der Verbundscheibe befindet. Der zweite Anschlussbereich weist eine Kontaktstelle für einen elektrischen Anschluss, insbesondere eine Lötkontaktstelle auf. Der zweite Anschlussbereich befindet sich an einem zweiten Ende (Endbereich) des Sammelleiters.

Jeder Sammelleiter ist an mindestens einer Stelle (Faltbereich) umgefaltet. Das bedeutet, dass der Sammelstreifen jenseits des ersten Anschlussbereichs derart aus seiner Erstreckungsebene angehoben und herumgeführt ist, dass die erste Seite (Oberseite) eines Teils des Sammelleiters der ersten Seite (Oberseite) eines weiteren Teils des Sammelleiters zugewandt ist und insbesondere aufliegt.

Jeder Sammelleiter lässt sich somit in zwei Abschnitte unterteilen: einem ersten Abschnitt (Sammelleiterabschnitt), der sich vom ersten Anschlussbereich bis zur Stelle der Faltung erstreckt, und einem zweiten Abschnitt (Sammelleiterabschnitt), der sich von der Stelle der Faltung bis zum zweiten Anschlussbereich erstreckt. Die Erstreckungsrichtung des Sammelleiters im ersten Abschnitt weicht durch die Umfaltung von der Erstreckungsrichtung des Sammelleiters im zweiten Abschnitt ab. Die Faltung des ersten und zweiten Abschnitts eines Sammelleiters erfolgt um einen Winkel α (alpha). Der Winkel α gibt dabei die Abweichung der Erstreckungsrichtung des Sammelleiters im ersten beziehungsweise im zweiten Abschnitt an. Der Winkel α (alpha) beträgt bevorzugt von 10° bis 170°, besonders bevorzugt von 45° bis 135°, noch mehr bevorzugt von 60° bis 120° und insbesondere von 80° bis 100°. Der erste und der zweite Abschnitt bilden beispielsweise einen Winkel α von 90°. Die Flächennormale des ersten Abschnitts des Sammelleiters ist parallel zur Flächennormale des zweiten Abschnitts des Sammelleiters.

In einer vorteilhaften Ausgestaltung erfolgt die Faltung eines jeden Sammelleiters nicht scharfkantig. Bevorzugt weist die Faltung einen Krümmungsradius r von 0,1 mm bis 100 mm, bevorzugt von 0,5 mm bis 10 mm und insbesondere von 1 mm bis 5 mm auf. Dies vermeidet eine Beschädigung und Erhöhung des elektrischen Widerstands, wie es bei einer scharfkantigen Biegung der Fall sein könnte.

Die beiden Sammelleiter können mit zwei Spannungsanschlüssen verbunden werden, die auch Pole (positiver oder negativer Pol) genannt werden.

In einer vorteilhaften Ausgestaltung erstreckt sich der erste Anschlussbereich eines jeweiligen Sammelleiters entlang einer Seitenkante des elektrooptischen Funktionselements (in aller Regel entspricht dies einer Scheibenkante der Verbundscheibe). Die Länge der ersten Anschlussbereichs eines jeweiligen Sammelleiters beträgt beispielsweise mindestens 10 %, mindestens 20% oder mindestens 30% der Länge der Seitenkante des Funktionselementes. Beispielsweise kann die Länge des ersten Anschlussbereichs eines jeweiligen Sammelleiters auch weniger als 50% der Länge der Seitenkante des Funktionselementes betragen.

Vorteilhaft kontaktieren die beiden Sammelleiter die beiden Flächenelektroden an einer selben Seitenkante und sind an einer selben Scheibenkante aus der Verbundscheibe herausgeführt.

Das elektrooptische Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine erste Trägerfolie, eine erste Flächenelektrode, eine aktive Schicht, eine zweite Flächenelektrode und eine zweite Trägerfolie.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. Bei mechanisch geschnittenen Seitenkanten kann die Gefahr bestehen, dass sich das Material gleichsam zurückzieht, was optisch auffällig ist und die Ästhetik der Scheibe nachteilig beeinflusst

Die erste Flächenelektrode und die zweite Flächenelektrode werden jeweils von einer elektrisch leitfähigen Schicht gebildet. Diese elektrisch leitfähigen Schichten enthalten zumindest ein Metall, eine Metalllegierung oder ein transparentes leitfähiges Oxid, bevorzugt ein transparentes leitfähiges Oxid, und weisen eine Dicke von 10 nm bis 2 µm auf. Die Flächenelektroden sind bevorzugt transparent. Transparent bedeutet hier durchlässig für elektromagnetische Strahlung, vorzugsweise elektromagnetische Strahlung einer Wellenlänge von 300 nm bis 1300 nm und insbesondere für sichtbares Licht. Elektrisch leitfähige Schichten sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Einzelschichten. Die funktionellen Einzelschichten enthalten bevorzugt zumindest ein Metall, beispielsweise Silber, Gold, Kupfer, Nickel und/oder Chrom, oder eine Metalllegierung. Die funktionellen Einzelschichten enthalten besonders bevorzugt mindestens 90 Gew. % des Metalls, insbesondere mindestens 99,9 Gew. % des Metalls. Die funktionellen Einzelschichten können aus dem Metall oder der Metalllegierung bestehen. Die funktionellen Einzelschichten enthalten besonders bevorzugt Silber oder eine silberhaltige Legierung. Solche funktionellen Einzelschichten weisen eine besonders vorteilhafte elektrische Leitfähigkeit bei gleichzeitiger hoher Transmission im sichtbaren Spektralbereich auf. Die Dicke einer funktionellen Einzelschicht beträgt bevorzugt von 5 nm bis 50 nm, besonders bevorzugt von 8 nm bis 25 nm. In diesem Dickenbereich wird eine vorteilhaft hohe Transmission im sichtbaren Spektralbereich und eine besonders vorteilhafte elektrische Leitfähigkeit erreicht.

Die Flächenelektroden können prinzipiell durch jede elektrisch leitfähige Schicht gebildet werden, die elektrisch kontaktiert werden kann.

Bevorzugt enthalten die erste Trägerfolie und/oder die zweite Trägerfolie zumindest ein im Autoklavprozess nicht vollständig aufschmelzendes Polymer, bevorzugt Polyethylenterephthalat (PET). Besonders bevorzugt bestehen die erste und die zweite Trägerfolie aus einer PET-Folie. Das ist besonders vorteilhaft im Hinblick auf die Stabilität der Mehrschichtfolie. Die Trägerfolien können aber auch beispielsweise Ethylenvinylacetat (EVA) und/oder Polyvinylbutyral (PVB), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen enthalten. Die Dicke jeder Trägerfolie beträgt bevorzugt von 0,1 mm bis 1 mm, besonders bevorzugt von 0,1 mm bis 0,2 mm. Die Trägerfolien sind bevorzugt transparent. Die Flächenelektroden sind bevorzugt auf einer Oberfläche der Trägerfolie angeordnet, das heißt auf genau einer der beiden Seiten der Trägerfolie (also auf deren Vorderseite oder deren Rückseite). Die Trägerfolien sind dabei im Schichtstapel der Mehrschichtfolie so ausgerichtet, dass die Flächenelektroden benachbart zur aktiven Schicht angeordnet sind.

Unter elektrisch regelbaren optischen Eigenschaften werden im Sinne der Erfindung solche Eigenschaften verstanden, die stufenlos regelbar sind, aber gleichermaßen auch solche, die zwischen zwei oder mehr diskreten Zuständen geschaltet werden können.

Das Funktionselement kann außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Das Funktionselement ist über eine Zwischenschicht zwischen der ersten Scheibe und der zweiten Scheibe der Verbundscheibe eingebunden. Die Zwischenschicht umfasst dabei bevorzugt eine erste thermoplastische Verbundfolie, die das Funktionselement mit der ersten Scheibe verbindet, und eine zweite thermoplastische Verbundfolie, die das Funktionselement mit der zweiten Scheibe verbindet. Typischerweise wird die Zwischenschicht durch mindestens die erste und die zweite thermoplastische Verbundfolie gebildet, die flächig aufeinander angeordnet werden und miteinander laminiert werden, wobei das Funktionselement zwischen die beiden Schichten eingelegt wird. Die mit dem Funktionselement überlappenden Bereiche der Verbundfolien bilden dann die Bereiche, welche das Funktionselement mit den Scheiben verbinden. In anderen Bereichen der Scheibe, wo die thermoplastischen Verbundfolien direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine thermoplastische Verbundfolie kann beispielsweise durch eine einzige thermoplastische Folie ausgebildet werden. Eine thermoplastische Verbundfolie kann auch aus Abschnitten unterschiedlicher thermoplastischer Folien gebildet werden, deren Seitenkanten aneinandergesetzt sind. Zusätzlich zu einer ersten thermoplastischen Verbundfolie oder einer zweiten thermoplastischen Verbundfolie können auch weitere thermoplastische Verbundfolien vorhanden sein. Diese können bei Bedarf auch zur Einbettung weiterer Folien umfassend funktionelle Schichten, beispielsweise infrarotreflektierender Schichten oder akustisch dämpfender Schichten, genutzt werden.

Die thermoplastischen Verbundfolien können auch getönte oder gefärbte Bereiche enthalten. Solche Folien sind beispielsweise durch Koextrusion erhältlich. Alternativ können ein ungetönter Folienabschnitt und ein getönter oder gefärbter Folienabschnitt zur einer thermoplastischen Verbundfolie zusammengesetzt werden. Der getönte oder gefärbte Bereich kann homogen gefärbt oder getönt sein, das heißt eine ortsunabhängige Transmission aufweisen. Die Tönung oder Färbung kann aber auch inhomogen sein, insbesondere kann ein Transmissionsverlauf realisiert sein.

In einer bevorzugten Ausgestaltung ist das Funktionselement, genauer die Seitenkanten des Funktionselements umlaufend von einer thermoplastischen Rahmenfolie umgeben. Die Rahmenfolie ist rahmenartig ausgebildet mit einer Aussparung, in welche das Funktionselement eingelegt wird. Die thermoplastische Rahmenfolie kann durch eine thermoplastische Folie gebildet werden, in welche die Aussparung durch Ausschneiden eingebracht worden ist. Alternativ kann die thermoplastische Rahmenfolie auch aus mehreren Folienabschnitten um das Funktionselement zusammengesetzt werden. Die Zwischenschicht ist somit in einer bevorzugten Ausführungsform aus insgesamt mindestens drei flächig aufeinander angeordneten thermoplastischen Verbundfolien gebildet, wobei die Rahmenfolie als mittlere Schicht eine Aussparung ausweist, in der das Funktionselement angeordnet ist. Bei der Herstellung wird die thermoplastische Rahmenfolie zwischen der ersten und der zweiten thermoplastischen Verbundfolie angeordnet, wobei die Seitenkanten aller thermoplastischen Folien bevorzugt in Deckung befindlich sind. Die thermoplastische Rahmenfolie weist bevorzugt etwa die gleiche Dicke auf wie das Funktionselement. Dadurch wird der lokale Dickenunterschied, der durch das örtlich begrenzte Funktionselement eingebracht wird, kompensiert, so dass Glasbruch beim Laminieren vermieden werden kann.

Automobilverglasungen, insbesondere Windschutzscheiben, Heckscheiben und Dachscheiben, weisen meist einen umlaufenden peripheren Abdeckdruck aus einer opaken Emaille auf, der insbesondere dazu dient, den zum Einbau der Scheibe verwendeten Kleber vor UV-Strahlung zu schützen und optisch zu verdecken. Dieser periphere Abdeckdruck wird bevorzugt dazu verwendet, auch die Kanten des Funktionselementes zu verdecken, die sich im Randbereich der Verglasung befinden. Die Sammelleiter sowie die erforderlichen elektrischen Anschlüsse werden ebenfalls im Bereich des Abdeckdrucks angebracht.

Die erste thermoplastische Verbundfolie und die zweite thermoplastische Verbundfolie sowie gegebenenfalls auch die thermoplastische Rahmenfolie enthalten bevorzugt zumindest Polyvinylbutyral (PVB), Ethylenvinylacetat (EVA) und / oder Polyurethan (PU), besonders bevorzugt PVB.

Die Dicke jeder thermoplastischen Verbundfolie sowie der Rahmenfolie beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Die erste Scheibe und die zweite Scheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollte diese im zentralen Sichtbereich eine ausreichende Lichttransmission aufweisen, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der ersten Scheibe und der zweiten Scheibe kann breit variieren und so den Erfordernissen im Einzelfall angepasst werden. Die erste Scheibe und die zweite Scheibe weisen bevorzugt Dicken von 0,5 mm bis 5 mm auf, besonders bevorzugt von 1 mm bis 3 mm.

Die Erfindung umfasst außerdem ein Verfahren zur Herstellung einer erfindungsgemäßen Anschlussanordnung mit den folgenden Schritten:
a) Bereitstellen eines elektrooptischen Funktionselements,
b) Aufbringen von Sammelleitern auf die beiden Flächenelektroden und Umfalten der Sammelleiter,
c) Laminieren der Verbundscheibe, wobei die beiden Sammelleiter jeweils aus der Verbundscheibe herausgeführt werden.

Das Funktionselement wird bevorzugt in Form einer Mehrschichtfolie umfassend in dieser Reihenfolge eine erste Trägerfolie, eine aktive Schicht und eine zweite Trägerfolie, bereitgestellt, wobei die Flächenelektroden auf den der aktiven Schicht zugewandten Oberflächen der Trägerfolien angebracht sind. Der Vorteil einer Mehrschichtfolie mit elektrisch schaltbaren optischen Eigenschaften liegt in einer einfachen Herstellung der Verglasung. Das eigentliche Funktionselement ist durch die Trägerfolien vorteilhaft vor Beschädigung, insbesondere Korrosion geschützt und kann vor der Herstellung der Verglasung auch in größerer Stückzahl bereitgestellt werden, was aus ökonomischen und verfahrenstechnischen Gründen wünschenswert sein kann. Die Mehrschichtfolie kann bei der Herstellung der Verbundscheibe einfach in den Verbund eingelegt werden, welcher dann mit herkömmlichen Verfahren laminiert wird.

Die Erfindung umfasst außerdem die Verwendung einer erfindungsgemäßen Anschlussanordnung als Gebäudeverglasung oder Fahrzeugverglasung, bevorzugt als Fahrzeugverglasung, insbesondere als Windschutzscheibe oder Dachscheibe eines Kraftfahrzeugs.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Figur 1: eine schematische Schnittansicht einer Anschlussanordnung mit PDLC-Funktionselement im nichttransparenten Zustand,
- Figur 2: eine schematische Schnittansicht der Anschlussanordnung von Figur 1 mit PDLC-Funktionselement im transparenten Zustand,
- Figur 3A-3C: perspektivische Ansichten eines erfindungsgemäßen PDLC-Funktionselements und dessen elektrischer Kontaktierung in der Anschlussanordnung von Figur 1 und 2,
- Figur 4: ein Flussdiagramm eines erfindungsgemäßen Verfahrens zur Herstellung einer erfindungsgemäßen Anschlussanordnung.

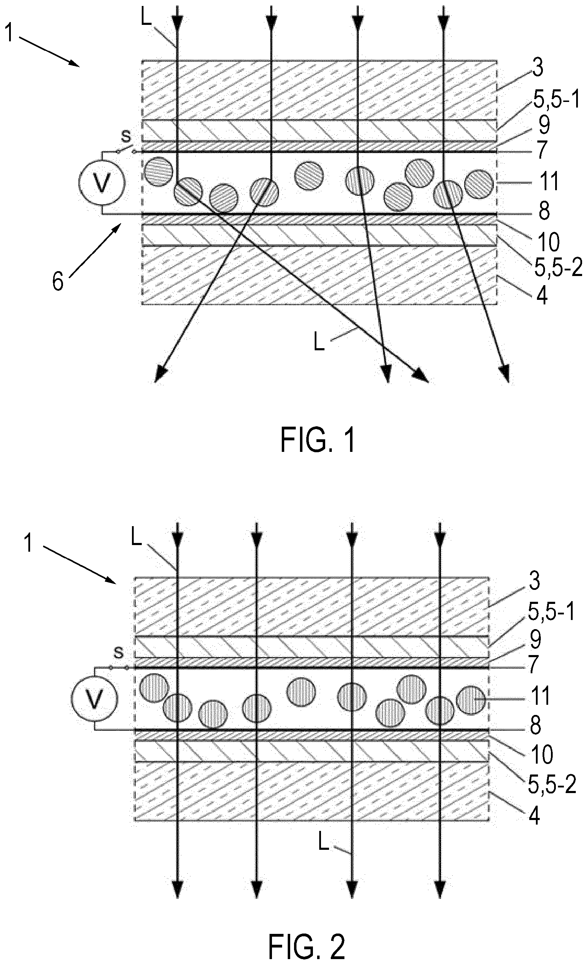

Es sei zunächst Bezug auf die Figuren 1 und 2 genommen, worin eine insgesamt mit der Bezugszahl 1 bezeichnete Anschlussanordnung mit Verbundscheibe 2 anhand einer Schnittansicht senkrecht zur Scheibenebene in schematischer Weise veranschaulicht ist. Die Verbundscheibe 2, die hier beispielsweise als Windschutzscheibe eines Kraftfahrzeugs ausgebildet ist, umfasst eine erste Scheibe 3, die als Außenscheibe dient, und eine zweite Scheibe 4 als Innenscheibe. Die Innenscheibe ist dabei die zum Fahrzeuginnenraum gerichtete Scheibe, während die Außenscheibe zur Fahrzeugumgebung weist. Die beiden Scheiben 3, 4 bestehen beispielsweise aus Kalk-Natron-Glas. Die beiden Scheiben 3, 4 sind durch eine thermoplastische Zwischenschicht 5 fest miteinander verbunden.

Die Verbundscheibe 2 ist mit einem elektrooptischen Funktionselement 6 ausgestattet, bei dem es sich hier beispielsweise um ein PDLC-Funktionselement handelt. Beispielsweise dient das PDLC-Funktionselement als elektrisch regelbare Sonnenblende, das in einem Bereich oberhalb des zentralen Sichtbereichs B (wie in ECE-R43 definiert) angebracht ist. Das PDLC-Funktionselement ist durch eine kommerziell erhältliche PDLC-Mehrschichtfolie gebildet, die in die Zwischenschicht 5 eingelagert ist. Die Zwischenschicht 5 umfasst insgesamt drei thermoplastischen Verbundfolien, die jeweils durch eine thermoplastische Folie mit einer Dicke von beispielsweise 0,38 mm aus PVB ausgebildet sind. In den Figuren 1 und 2 sind nur eine erste thermoplastische Verbundfolie 5-1, die mit der ersten Scheibe 3 verbunden ist, und eine zweite thermoplastische Verbundfolie 5-2, die mit der zweiten Scheibe 4 verbunden ist, gezeigt. Die dazwischenliegende thermoplastische Rahmenfolie, welche in den Figuren 1 und 2 nicht dargestellt ist, weist einen Ausschnitt auf, in welchen die zugeschnittene PDLC-Mehrschichtfolie passgenau, das heißt an allen Seiten bündig, eingelegt ist. Die dritte thermoplastische Verbundfolie bildet also gleichsam eine Art Passepartout für das Funktionselement 6, welches somit rundum in thermoplastisches Material eingekapselt und dadurch geschützt ist.

Das elektrisch regelbare Funktionselement 6 ist eine kommerzielle erhältliche Mehrschichtfolie, bestehend aus einer aktiven Schicht 11 zwischen zwei Flächenelektroden 7, 8 und zwei Trägerfolien 9, 10. Die aktive Schicht 11 enthält eine Polymermatrix mit darin dispergierten Flüssigkristallen, die sich in Abhängigkeit der an die Flächenelektroden 7, 8 angelegten elektrischen Spannung ausrichten, wodurch die optischen Eigenschaften geregelt werden können. Die Trägerfolien 9, 10 bestehen beispielsweise aus PET und weisen eine Dicke von beispielsweise 0,125 mm auf. Die Trägerfolien 9, 10 sind jeweils mit einer zur aktiven Schicht 11 weisenden Beschichtung aus ITO mit einer Dicke von etwa 100 nm versehen, wodurch an der ersten Trägerfolie 9 die erste Flächenelektrode 7 und an der zweiten Trägerfolie 10 die zweite Flächenelektrode 8 gebildet werden.

Wird keine Spannung angelegt, so sind die Flüssigkristalle ungeordnet ausgerichtet, was zu einer starken Streuung des durch die aktive Schicht 11 tretenden Lichts L führt. Dieser Zustand ist in Figur 1 veranschaulicht. Wird an die Flächenelektroden 19, 20 eine Spannung S angelegt, so richten sich die Flüssigkristalle in einer gemeinsamen Richtung aus und die Transmission von Licht L durch die aktive Schicht 11 wird erhöht. Das PDLC-Funktionselement wirkt weniger durch Herabsetzung der Gesamttransmission, sondern durch Erhöhung der Streuung. Dieser Zustand ist in Figur 2 veranschaulicht.

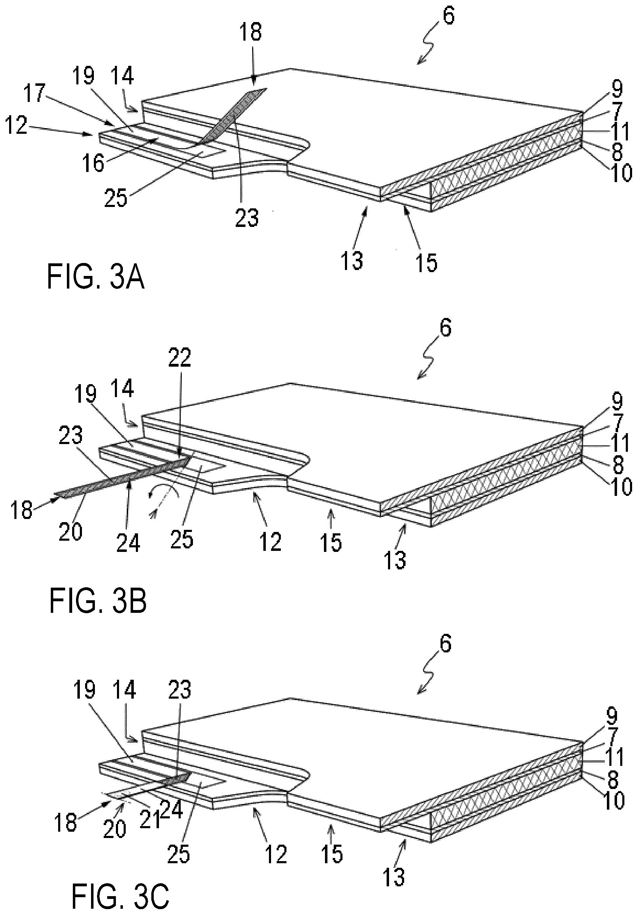

Die beiden Flächenelektroden 7, 8 sind jeweils über einen einzigen Sammelleiter mit der Bordelektrik verbindbar, was im Weiteren näher erläutert wird. In den Figuren 3A bis 3C ist der elektrische Anschluss des Funktionselements 6 jeweils anhand einer perspektivischen Ansicht erläutert. Zum Zwecke einer einfacheren Darstellung sind die Zwischenschicht 5 und die beiden Einzelscheiben 3, 4 der Anschlussanordnung 1 nicht dargestellt.

Sei zunächst Figur 3A betrachtet. Wie in Figur 3A erkennbar, ist eine Längskante (Seitenkante) des Funktionselements 6 mit zwei Anschlusszonen 12, 13 versehen, welche zum elektrischen Anschluss der zugehörigen Flächenelektrode 7, 8 dienen.

Die erste Trägerfolie 9 und hieran aufgebrachte erste Flächenelektrode 7 sowie die aktive Schicht 11 weisen entlang der Längskante einen gemeinsamen ersten Ausschnitt 14 auf, der sich bis zur zweiten Trägerfolie 10 mit aufgebrachter zweiter Flächenelektrode 8 erstreckt. Die zweite Flächenelektrode 8 ist daher von der Seite der aktiven Schicht her (hier von oben) zugänglich. Die zweite Trägerfolie 10 und die zweite Flächenelektrode 8 bilden im Bereich des ersten Ausschnitts 14 eine erste Anschlusszone 12. In entsprechender Weise weisen die zweite Trägerfolie 10 und aufgebrachte zweite Flächenelektrode 8 sowie die aktive Schicht 11 entlang derselben Längskante einen gemeinsamen zweiten Ausschnitt 15 auf, der sich bis zur ersten Trägerfolie 9 und aufgebrachter erster Flächenelektrode 7 erstreckt. Die erste Flächenelektrode 7 ist daher von der Seite der aktiven Schicht her (hier von unten) zugänglich. Die erste Trägerfolie 9 und die erste Flächenelektrode 7 bilden im Bereich des zweiten Ausschnitts 15 eine zweite Anschlusszone 13.

Jede Anschlusszone 12, 13 ist mit einem einzigen Sammelleiter 16 versehen. In den Figuren 3A bis 3C ist aufgrund der perspektivischen Darstellung nur die erste Anschlusszone 12 in den Einzelheiten erkennbar. Die beiden Anschlusszonen 12, 13 sind entlang der Längskante des Funktionselements 18 seitlich versetzt angeordnet und in gleicher Weise ausgebildet, wobei die erste Anschlusszone 12 zur ersten Flächenelektrode 7 und die zweite Anschlusszone 13 zur zweiten Flächenelektrode 8 gewandt ist. Es genügt demnach auch die Beschreibung der ersten Anschlusszone 12, wobei die Ausführungen für die erste Anschlusszone 12 für die zweite Anschlusszone 13 in analoger Weise gelten.

Demnach ist auf die erste Anschlusszone 12 ein Sammelleiter 16 mit länglicher Struktur aufgebracht. Der Sammelleiter 16 ist in Form eines Streifens aus einem elektrisch leitfähigen Material ausgebildet, hier ein Metallfolienstreifen beispielsweise aus Silber- oder Kupferfolie. Der Sammelleiter 16 ist dünn ausgebildet (d.h. die Dicke ist derart gering), so dass er flexibel und biegbar ist und insbesondere umgefaltet werden kann. Der Sammelleiter 16 weist an einem ersten Ende 17 (Endbereich) einen ersten Anschlussbereich 19 auf. Der erste Anschlussbereich 19 ist auf die zweite Flächenelektrode 8 der ersten Anschlusszone 12 aufgebracht und hat Berührungskontakt mit der zweiten Flächenelektrode 8 bzw. hier beispielsweise mit einer Schicht aus silberhaltiger Paste 26, welche zwischen dem ersten Anschlussbereich 19 des Sammelleiters 16 und der zweiten Flächenelektrode 8 angeordnet ist und die elektrische Anbindung verbessert. Der Sammelleiter 16 ist im ersten Anschlussbereich 19 mit der zweiten Flächenelektrode 8 elektrisch leitend verbunden, beispielsweise über eine Lotmasse, über einen elektrisch leitfähigen Kleber oder ein elektrisch leitfähiges Klebeband oder einfach durch direktes Auflegen. Wie bereits ausgeführt, ist zur Verbesserung der leitenden Verbindung zwischen der zweiten Flächenelektrode 8 und dem Sammelleiter 16 beispielsweise eine silberhaltige Paste 26 angeordnet. Diese ist jedoch optional und kann auch weggelassen werden. Im vorliegenden Ausführungsbeispiel ist der Sammelleiter 16 über einen elektrisch leitfähigen Klebstoff 23, der auf der zweiten Seite (Unterseite) des Sammelleiters 16 aufgebracht ist, mit der zweiten Flächenelektrode 8 fest verbunden.

Der Sammelleiter 16 weist beispielsweise eine Dicke von 10 µm bis 500 µm und eine Breite von 0,5 mm bis 100 mm sowie eine Länge von 5 cm bis 150 cm auf. Ein solcher Sammelleiter 16 ist besonders flexibel und kann gut in die Verbundscheibe 2 einlaminiert werden.

Der erste Anschlussbereich 19 des Sammelleiters 16 erstreckt sich entlang der Längskante (Seitenkante) des Funktionselements 6 und hier entlang der länglichen ersten Anschlusszone 13.

Der Sammelleiter 16 umfasst weiterhin einen zweiten Anschlussbereich 20 außerhalb der Verbundscheibe 2, welcher über eine Kontaktstelle 21 für einen elektrischen Anschluss, insbesondere eine Lötkontaktstelle, verfügt. Die Kontaktstelle 21 ist auf der zweiten Seite (Unterseite) des Sammelleiters 16 angeordnet. Der Klebstoff 23 ist zu diesem Zweck auf dem aus der Verbundscheibe 2 herausgeführten Teil des Sammelleiters 16, bei dem die Unterseite nach oben gerichtet ist, entfernt.

Zwischen dem ersten Anschlussbereich 19 und dem zweiten Anschlussbereich 20 ist der Sammelleiter an einer Stelle, im Weiteren als Faltbereich 22 bezeichnet, umgefaltet. Der Faltbereich 22 befindet sich innerhalb der Verbundscheibe 2 im Bereich der ersten Anschlusszone 12, d.h. in Berührungskontakt mit der zweiten Flächenelektrode 8. Die Erstreckungsrichtung eines ersten Sammelleiterabschnitts 24 vor dem Faltbereich 22 und die Erstreckungsrichtung eines zweiten Sammelleiterabschnitts 25 nach dem Faltbereich 22 sind in einem Winkel von 90° angeordnet. Die Flächennormalen der beiden Sammelleiterabschnitte 24, 25 sind parallel. Der Faltbereich 22 weist einen Krümmungsradius r von 0,1 mm bis 100 mm auf, was eine Beschädigung und Erhöhung des elektrischen Widerstands, wie es bei einer scharfkantigen Biegung der Fall sein könnte, vermeidet.

In Figur 3A ist eine Situation gezeigt, bei der der Sammelleiter 16 mit seinem ersten Anschlussbereich 19 auf der zweiten Flächenelektrode 8 aufgebracht ist, wobei ein Abschnitt des Sammelleiters 16 für die Faltung angehoben ist. In Figur 3B ist der Sammelleiter 16 im umgefalteten Zustand gezeigt, wobei sich auf der zweiten Seite (Unterseite) des Sammelleiters 16 noch der leitfähige Klebstoff 23 befindet. In Figur 3 3C ist eine Situation gezeigt, bei der der leitfähige Klebstoff 23 von dem außerhalb der Verbundscheibe 2 befindlichen Teil des Sammelleiters 16 entfernt wurde, so dass die Kontaktstelle 21 als Lötkontaktstelle mit einem elektrischen Anschluss verbindbar ist.

Die beiden Sammelleiter 16 sind an derselben Längskante der Verbundscheibe 2 aus der Verbundscheibe 2 herausgeführt und können beispielsweise mit zwei Spannungsanschlüssen gegensätzlicher Polarität verbunden werden.

Der außerhalb der Verbundscheibe 1 befindliche Teil eines jeden Sammelleiters 16 kann mit einer Isolationsschicht versehen sein, beispielsweise aus Polyimid, was in den Figuren nicht dargestellt ist.

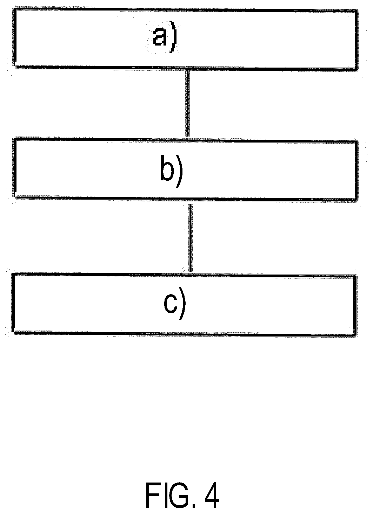

Figur 4 zeigt ein Flussdiagramm eines erfindungsgemäßen Verfahrens zur Herstellung der erfindungsgemäßen Anschlussanordnung 1.

Das Verfahren umfasst zumindest die folgenden Verfahrensschritte:
a) Bereitstellen eines elektrooptischen Funktionselements,
b) Aufbringen von Sammelleitern auf die beiden Flächenelektroden und Umfalten der Sammelleiter,
c) Laminieren der Verbundscheibe, wobei die beiden Sammelleiter jeweils aus der Verbundscheibe herausgeführt werden.

Aus obigen Ausführungen ergibt sich, dass die Erfindung einen einfachen, kostengünstigen und materialsparenden elektrischen Anschluss der Flächenelektroden eines Funktionselements in einer Verbundscheibe ermöglicht, wobei jede Flächenelektrode lediglich einen einzigen Sammelleiter aufweist, der umgefaltet wird. Es besteht keine Gefahr, dass die Flächenelektroden durch Anlöten einer elektrisch leitfähigen Struktur an einen Sammelleiter einer Flächenelektrode beschädigt werden.

### Bezugszeichen:

- 1: Anschlussanordnung
- 2: Verbundscheibe
- 3: erste Scheibe
- 4: zweite Scheibe
- 5: Zwischenschicht
- 5-1, 5-2: Verbundfolie
- 6: Funktionselement
- 7: erste Flächenelektrode
- 8: zweite Flächenelektrode
- 9: erste Trägerfolie
- 10: zweite Trägerfolie
- 11: aktive Schicht
- 12: erste Anschlusszone
- 13: zweite Anschlusszone
- 14: erster Ausschnitt
- 15: zweiter Ausschnitt
- 16: Sammelleiter
- 17: erstes Ende
- 18: zweites Ende
- 19: erster Anschlussbereich
- 20: zweiter Anschlussbereich
- 21: Kontaktstelle
- 22: Faltbereich
- 23: Klebstoff
- 24: erster Sammelleiterabschnitt
- 25: zweiter Sammelleiterabschnitt
- 26: silberhaltige Paste

## Patentansprüche

1. Anschlussanordnung (1), umfassend:
- eine Verbundscheibe (2) aus einer ersten Scheibe (3) und einer zweiten Scheibe (4), die mit einer Zwischenschicht (5) verbunden sind,
- ein elektrooptisches Funktionselement (6) mit einer zwischen zwei Flächenelektroden (7, 8) angeordneten aktiven Schicht (11), das zwischen der ersten Scheibe (3) und der zweiten Scheibe (4) angeordnet ist,
wobei auf den beiden Flächenelektroden (7, 8) jeweils ein einziger in Form eines Streifens ausgebildeter, flexibler Sammelleiter (16) aufgebracht ist, wobei der Sammelleiter (16) umgefaltet und aus der Verbundscheibe (2) herausgeführt ist.

2. Anschlussanordnung (1) nach Anspruch 1, wobei ein Winkel zwischen der Erstreckungsrichtung eines ersten Sammelleiterabschnitts (24) vor einem Faltbereich (22) und der Erstreckungsrichtung eines zweiten Sammelleiterabschnitts (25) nach dem Faltbereich (22) von 10° bis 170°, insbesondere 90°, beträgt.

3. Anschlussanordnung (1) nach Anspruch 2, bei welcher die beiden Sammelleiter (16) senkrecht zu einer Scheibenkante aus der Verbundscheibe (2) herausgeführt sind.

4. Anschlussanordnung (1) nach einem der Ansprüche 1 bis 3, bei welcher die beiden Sammelleiter (16) an einer selben Scheibenkante aus der Verbundscheibe (2) herausgeführt sind.

5. Anschlussanordnung (1) nach einem der Ansprüche 1 bis 4, bei welcher die beiden Sammelleiter (16) jeweils einen ersten Anschlussbereich (19) aufweisen, der mit der zugehörigen Flächenelektrode (7, 8) oder einer zwischen Flächenelektrode und Sammelleiter angeordneten Schicht (26) direkt verbunden ist, wobei sich der erste Anschlussbereich (19) entlang einer Seitenkante des Funktionselements (6) erstreckt.

6. Anschlussanordnung (1) nach einem der Ansprüche 1 bis 5, bei welcher die beiden Sammelleiter (16) jeweils als Streifen einer elektrisch leitfähigen Folie, insbesondere einer Metallfolie ausgebildet sind.

7. Anschlussanordnung (1) nach einem der Ansprüche 1 bis 6, bei welcher die beiden Sammelleiter (16) jeweils eine Dicke von 10 µm bis 500 µm und/oder eine Breite von 0,5 mm bis 100 mm und/oder eine Länge von 5 cm bis 150 cm aufweisen.

8. Anschlussanordnung (1) nach einem der Ansprüche 1 bis 7, bei welcher die beiden Sammelleiter (16) jeweils einen außerhalb der Verbundscheibe angeordneten zweiten Anschlussbereich (20), insbesondere eine Lötkontaktstelle (21), für die elektrische Verbindung mit einem Außenanschluss aufweisen.

9. Anschlussanordnung (1) nach einem der Ansprüche 1 bis 8, bei welcher die beiden Sammelleiter (16) jeweils durch Auflegen, eine Lotmasse, einen elektrisch leitfähigen Klebstoff oder ein elektrisch leitfähiges Klebeband auf die zugehörige Flächenelektrode (7, 8) aufgebracht sind.

10. Anschlussanordnung (1) nach einem der Ansprüche 1 bis 9, bei welcher die beiden Sammelleiter (6) jeweils nicht scharfkantig umgefaltet sind, wobei die Faltung einen Krümmungsradius r von 0,1 mm bis 100 mm aufweist.

11. Verfahren zur Herstellung einer Anschlussanordnung (101) nach einem der Ansprüche 1 bis 10, mit den folgenden Schritten:
a) Bereitstellen eines elektrooptischen Funktionselements (6),
b) Aufbringen von Sammelleitern (16) auf die beiden Flächenelektroden (7, 8) und Umfalten der Sammelleiter (16),
c) Laminieren der Verbundscheibe (2), wobei die beiden Sammelleiter (16) jeweils aus der Verbundscheibe (2) herausgeführt werden.

12. Verwendung der Anschlussanordnung (1) nach einem der Ansprüche 1 bis 10 im Fahrzeugbereich oder im Baubereich, in Möbeln, elektrischen Geräten oder Dekorationsartikeln in einer Mehrscheibenverbundglasscheibe.

## Claims

1. Connection assembly (1), comprising:
- a composite pane (2) composed of a first pane (3) and a second pane (4), which are connected to an intermediate layer (5),
- an electro-optical functional element (6) having an active layer (11) arranged between two surface electrodes (7, 8), which electro-optical functional element is arranged between the first pane (3) and the second pane (4),
wherein a single flexible bus bar (16) in the form of a strip is applied on each of the two surface electrodes (7, 8), wherein the bus bar (16) is folded over and routed out of the composite pane (2).

2. Connection assembly (1) according to claim 1, wherein an angle between the direction of extension of a first bus bar section (24) before a fold region (22) and the direction of extension of a second bus bar section (25) after the fold region (22) is from 10° to 170°, in particular 90°.

3. Connection assembly (1) according to claim 2, in which the two bus bars (16) are routed out of the composite pane (2) perpendicular to a pane edge

4. Connection assembly (1) according to one of claims 1 through 3, in which the two bus bars (16) are routed out of the composite pane (2) at one and the same pane edge.

5. Connection assembly (1) according to one of claims 1 through 4, in which each of the two bus bars (16) has a first connection region (19) that is directly connected to the associated surface electrode (7, 8) or to a layer (26) arranged between the surface electrode and the bus bar, wherein the first connection region (19) extends along a side edge of the functional element (6).

6. Connection assembly (1) according to one of claims 1 through 5, in which each of the two bus bars (16) is implemented as strip of an electrically conductive foil, in particular of a metal foil.

7. Connection assembly (1) according to one of claims 1 through 6, in which each of the two bus bars (16) has a thickness of 10 µm to 500 µm and/or a width of 0.5 mm to 100 mm and/or a length of 5 cm to 150 cm.

8. Connection assembly (1) according to one of claims 1 through 7, in which each of the two bus bars (16) has a second connection region (20) arranged outside the composite pane, in particular a soldering contact point (21), for the electrical connection to an external connection.

9. Connection assembly (1) according to one of claims 1 through 8, in which each of the two bus bars (16) is applied to the associated surface electrode (7, 8) by placement, a soldering compound, an electrically conductive adhesive, or an electrically conductive adhesive tape.

10. Connection assembly (1) according to one of claims 1 through 9, in which each of the two bus bars (6) is folded over without sharp edges, wherein the fold has a radius of curvature r of 0.1 mm to 100 mm.

11. Method for producing a connection assembly (101) according to one of claims 1 through 10, comprising the following steps:
a) providing an electro-optical functional element (6),
b) applying bus bars (16) to the two surface electrodes (7, 8) and folding the bus bars (16) over,
c) laminating the composite pane (2), wherein each of the two bus bars (16) is routed out of the composite pane (2).

12. Use of the connection assembly (1) according to one of claims 1 through 10 in the vehicle sector or in the construction sector, in furniture, electrical appliances, or decorative items in a multi-pane composite glass pane.

## Revendications

1. Assemblage de connexion (1), comprenant :
- une vitre composite (2) composée d'une première vitre (3) et d'une seconde vitre (4), qui sont reliées à une couche intermédiaire (5),
- un élément fonctionnel électro-optique (6) comportant une couche active (11) disposée entre deux électrodes de surface (7, 8), cet élément fonctionnel électro-optique étant disposé entre la première vitre (3) et la seconde vitre (4),
une seule barre omnibus flexible (16) sous forme de bande est appliquée sur chacune des deux électrodes de surface (7, 8), la barre omnibus (16) étant repliée et acheminée hors de la vitre composite (2).

2. Assemblage de connexion (1) selon la revendication 1, dans lequel un angle entre la direction d'extension d'une première section de barre omnibus (24) avant une région de pliage (22) et la direction d'extension d'une deuxième section de barre omnibus (25) après la région de pliage (22) est de 10° à 170°, en particulier 90°.

3. Assemblage de connexion (1) selon la revendication 2, dans lequel les deux barres omnibus (16) sont acheminées hors de la vitre composite (2) perpendiculairement à un bord de la vitre.

4. Assemblage de connexion (1) selon l'une des revendications 1 à 3, dans lequel les deux barres omnibus (16) sont découpées dans la vitre composite (2) sur un seul et même bord de la vitre.

5. Assemblage de connexion (1) selon l'une des revendications 1 à 4, dans lequel chacune des deux barres omnibus (16) a une première zone de connexion (19) qui est directement connectée à l'électrode de surface associée (7, 8) ou à une couche (26) disposée entre l'électrode de surface et la barre omnibus, dans laquelle la première zone de connexion (19) s'étend le long d'un bord latéral de l'élément fonctionnel (6).

6. Assemblage de connexion (1) selon l'une des revendications 1 à 5, dans lequel chacune des deux barres omnibus (16) est réalisée sous forme de bande d'une feuille électriquement conductrice, en particulier d'une feuille métallique.

7. Assemblage de connexion (1) selon l'une des revendications 1 à 6, dans lequel chacune des deux barres omnibus (16) a une épaisseur de 10 µm à 500 µm et/ou une largeur de 0,5 mm à 100 mm et/ou une longueur de 5 cm à 150 cm.

8. Assemblage de connexion (1) selon l'une des revendications 1 à 7, dans lequel chacune des deux barres omnibus (16) présente une seconde zone de connexion (20) disposée à l'extérieur du panneau composite, en particulier un point de contact de soudure (21), pour la connexion électrique à une connexion externe.

9. Assemblage de connexion (1) selon l'une des revendications 1 à 8, dans lequel chacune des deux barres omnibus (16) est appliquée à l'électrode de surface associée (7, 8) par mise en place, d'une pâte à souder, d'un adhésif électriquement conducteur, ou d'un ruban adhésif électriquement conducteur.

10. Assemblage de connexion (1) selon l'une des revendications 1 à 9, dans lequel chacune des deux barres omnibus (6) est repliée sans arêtes vives, le pli ayant un rayon de courbure r de 0,1 mm à 100 mm.

11. Procédé de fabrication d'un assemblage de connexion (101) selon l'une des revendications 1 à 10, comprenant les étapes suivantes :
a) fournir un élément fonctionnel électro-optique (6),
b) appliquer des barres omnibus (16) aux deux électrodes de surface (7, 8) et replier les barres omnibus (16),
c) laminer le panneau composite (2), dans lequel chacune des deux barres omnibus (16) est acheminée hors du panneau composite (2).

12. Utilisation de l'assemblage (1) de connexion selon l'une des revendications 1 à 10 dans le secteur des véhicules ou dans le secteur de la construction, dans les meubles, les appareils électriques ou les articles de décoration dans une vitre composite à plusieurs vitres.
